# EUROPÄISCHE PATENTSCHRIFT

(11) **EP 0 416 296 B1**
(45) Veröffentlichungstag und Bekanntmachung des Hinweises auf die Patenterteilung: **09.06.1993**
(21) Anmeldenummer: 90115038.3
(22) Anmeldetag: 04.08.1990
(51) Int. Cl.: B21J 5/02, B23K 26/00

(54) **Verfahren zum Herstellen von im Gesenk geprägten oder geschmiedeten Werkstücken**
Procedure of making workpieces embossed or forged in a die
Procédé pour la fabrication de pièces d'oeuvre battues ou forgées dans une matrice

(30) Priorität: 02.09.1989 DE 3929181
(43) Veröffentlichungstag der Anmeldung: 13.03.1991
(73) Patentinhaber: Hazet-Werk Hermann Zerver GmbH & Co. KG, D-42804 Remscheid (DE)
(72) Erfinder: Zerver, Hermann-Jochen, D-5630 Remscheid (DE)
(74) Vertreter: Stenger, Watzke & Ring Patentanwälte

(56) Entgegenhaltungen:
- PATENT ABSTRACTS OF JAPAN vol. 13, no. 318 (M-852) 19 Juli 1989, & JP-A-01 104435 (MAZDA MOTOR CORP.) 21 April 1989,

## Beschreibung

Die Erfindung betrifft ein Verfahren zum Herstellen von im Gesenk geprägten oder geschmiedeten Werkstücken, vorzugsweise Handwerkzeugen, bei dem der Rohling nach dem Prägen oder Schmieden entgratet und einer Bearbeitung zumindest an den für die Funktion des Werkstückes wichtigen Flächen sowie einer Wärmebehandlung zur Gefügeveränderung unterzogen wird.

Bei den aus der Praxis bekannten Verfahren zum Herstellen von im Gesenk geprägten oder geschmiedeten Werkstücken wird als erstes ein Rohling hergestellt, beispielsweise durch Trennen eines Spaltstückes von einer Platine oder durch Ausstanzen aus einer Blechplatte. Dieser Rohling wird anschließend im Gesenk geprägt oder geschmiedet, wobei zwangsläufig ein Grat entsteht, und zwar in der Trennebene zwischen dem Unter- und Oberteil des Gesenks. Dieser am Präge- oder Schmiederohling vorhandene Grat wird anschließend mittels eines Schnittwerkzeuges in einer Presse entfernt, wonach der Schmiederohling einer Wärmebehandlung, beispielsweise Normalisieren oder Glühen, unterzogen und gesandstrahlt wird. Da der im Gesenk entstandene Grat mittels des Schnittwerkzeuges nicht vollständig entfernt werden kann, wird anschließend die Gratbahn auf einer speziellen Schleifmaschine geschliffen, bevor nunmehr die für die Funktion des Werkstückes wichtigen Flächen, beispielsweise die Schlüsselflächen an Handwerkzeugen, durch spanabhebende Bearbeitung, vorzugsweise Fräsen oder Räumen hergestellt werden. Diesem Bearbeitungsvorgang schließt sich eine weitere Wärmebehandlung zum Zwecke des Härtens bzw. Vergütens und ein Richtvorgang des sich hierbei verziehenden Werkstückes an. Trotz dieses Richtens muß das Werkstück an den Funktionsflächen spanabhebend, vorzugsweise durch Fräsen, Räumen oder Schleifen nachbearbeitet werden, bevor es nach einem erneuten Sandstrahlen durch Verchromen oder eine vergleichbare Oberflächenbehandlung fertiggestellt wird.

Aus den voranstehenden Darlegungen geht hervor, daß eine Vielzahl von unterschiedlichen Arbeitsvorgängen erforderlich ist, um den im Gesenk geprägten oder geschmiedeten Rohling fertig zu bearbeiten. Der Erfindung liegt die Aufgabe zugrunde, das eingangs geschilderte Verfahren zum Herstellen von im Gesenk geprägten oder geschmiedeten Werkstücken derart weiterzuentwickeln, daß unter Verzicht auf einige Bearbeitungsvorgänge eine schnellere und kostengünstigere Fertigung der Werkstücke möglich ist.

Die Lösung dieser Aufgabenstellung durch die Erfindung ist dadurch gekennzeichnet, daß zum Entgraten des geprägten bzw. geschmiedeten Werkstückrohlings ein bahngesteuerter Laser verwendet wird, daß der Entgratvorgang nach der Wärmebehandlung des nicht entgrateten Rohlings erfolgt und der Laser im selben Arbeitsgang die Funktionsflächen des Werkstückrohlings herstellt.

Bei dem erfindungsgemäßen Verfahren erfolgt somit das Entgraten des Werkstückrohlings mittels eines bahngesteuerten Lasers, so daß die bisher zum Entgraten in einer Presse verwendeten Schnittwerkzeuge entfallen. Derartige Schnittwerkzeuge sind nicht nur teuer in der Herstellung und im Gegensatz zu einem bahngesteuerten Laser einem ständigen Verschleiß unterworfen; sie müssen auch mit zunehmendem Verschleiß des Gesenkes regelmäßig nachgestellt bzw. nachgearbeitet werden, um sich an den aufgrund des Verschleißes im Gesenk vergrößernden Rohling anzupassen. Hiermit sind stets längere Stillstandszeiten verbunden. Außerdem können kleinere Losgrößen nicht in wirtschaftlicher Weise bearbeitet werden. Durch das erfindungsgemäße Entgraten mittels eines bahngesteuerten Lasers ist der Entgratvorgang nicht nur flexibel und damit auch für kleinere Losgrößen geeignet; der Entgratvorgang kann auch ohne Schwierigkelten den Abmessungen der sich aufgrund des Gesenkverschleißes vergrößernden Rohlinge angepaßt werden. Schließlich ergibt sich durch den Laser eine erheblich höhere Qualität der Gratbahn, so daß auf eine Nachbearbeitung verzichtet werden kann, weil beim erfindungsgemäßen Verfahren das Entgraten und Bearbeiten der Funktionsflächen durch den bahngesteuerten Laser nach der Wärmebehandlung vorgenommen werden. Der beim bekannten Verfahren durch die Wärmebehandlung nach der spanabhebenden Bearbeitung der Funktionsflächen entstehende Verzug entfällt damit ebenso wie die hierdurch erforderliche Nachbearbeitung der Funktionsflächen.

Insgesamt ergibt sich mit dem erfindungsgemäßen Verfahren eine bis auf 50 % verkürzte Durchlaufzeit bei der Fertigung von Werkstücken und ein erheblich umweltfreundlicheres Herstellungsverfahren, da der Einsatz von Schneid- und Schmiermitteln durch den Entfall der Schneidwerkzeuge zum Entgraten ebenso reduziert wird, wie der Energieverbrauch und Lärm.

Beim erfindungsgemäßen Verfahren entfällt auch die Entsorgung von Schmier-, Schneid- und Kühlmitteln sowie die Späne-Entsorgung der bisherigen spanabhebenden Bearbeitungsverfahren. Der Ersatz dieser spanabhebenden Bearbeitung durch den verschleißfreien Laser verringert außerdem die Werkzeugkosten und senkt den für das Herstellungsverfahren insgesamt benötigten Raumbedarf. Ein weiterer wesentlicher Vorteil der Erfindung besteht darin, daß durch die Verwendung des Lasers die Form der Funktionsflächen beliebig gewählt und optimiert werden kann, weil im Gegensatz zum bisherigen spanabhebenden Verfahren keinerlei Beschränkungen vorgegeben werden müssen. Außer dieser qualitativen Verbesserung der Werkstücke läßt sich schließlich die Durchlaufzeit bei deren Herstellung auf etwa 50 % reduzieren, so daß als Folge hiervon auch die Lagerhaltung reduziert werden kann.

Aus der JP-A 01-104435 war es zwar bei der Herstellung von aus Aluminium bestehenden Werkstücken, beispielsweise Pleueln, bekannt, den in einem Gesenk geschmiedeten Werkstückrohling mittels eines bahngesteuerten Lasers zu entgraten. Der Laser wurde aber nicht gleichzeitig zur Herstellung der Funktionsflächen des fertigen Werkstückes verwendet.

Mit der Erfindung wird weiterhin vorgeschlagen, die Bahn des Lasers dem sich aufgrund eines Verschleißes des Gesenkes vergrößernden Rohling, gegebenenfalls in Stufen, anzupassen, wobei diese Maßnahme ohne weiteres durch entsprechende Programmierung durchgeführt werden kann.

Mit der Erfindung wird schließlich vorgeschlagen, den Laser im Raum derart zu führen, daß er stets rechtwinklig zur Fläche des Grates und parallel zur jeweiligen Funktionsfläche verläuft. Hierdurch wird nicht nur ein Entgraten auch gekröpfter und kompliziert gestalteter Werkstücke ohne Schwierigkeiten möglich, es ergeben sich auch stets einwandfrei bearbeitete Funktionsflächen.

Anhand der Zeichnung soll ein Ausführungsbeispiel des erfindungsgemäßen Verfahrens erläutert werden, und zwar zeigen:
- Fig. 1: schematisch den Ablauf eines Ausführungsbeispiels des Verfahrens,
- Fig. 2: einen Querschnitt gemäß der Schnittlinie II-II in Fig. 1,
- Fig. 3: eine Seitenansicht eines Werkstückes mit verschiedenen Stellungen eines Lasers und
- Fig. 4: in vergrößerter Darstellung einen Teilschnitt durch ein Werkstück während des Entgratens mittels eines Lasers.

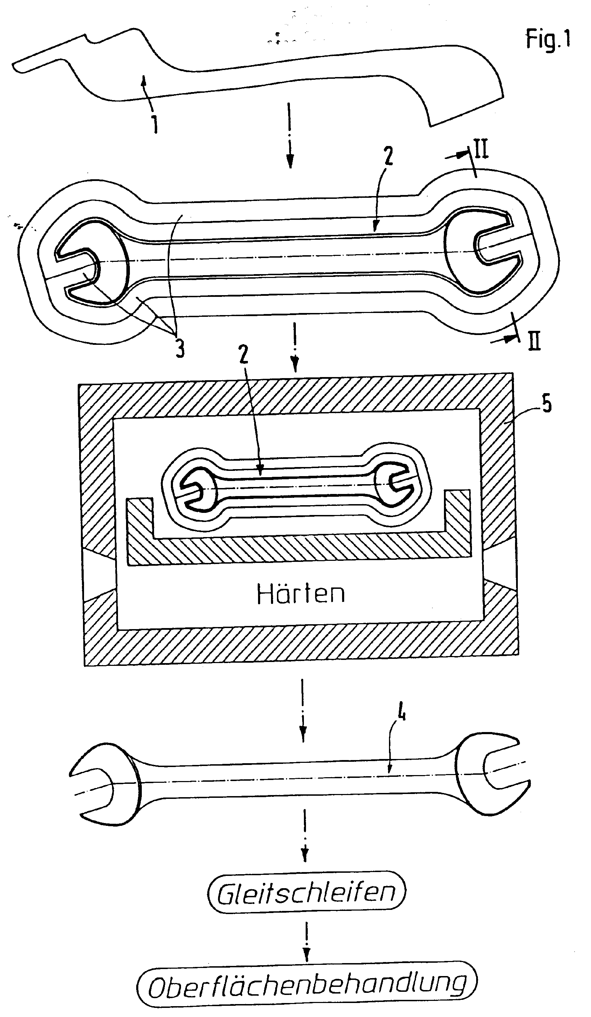

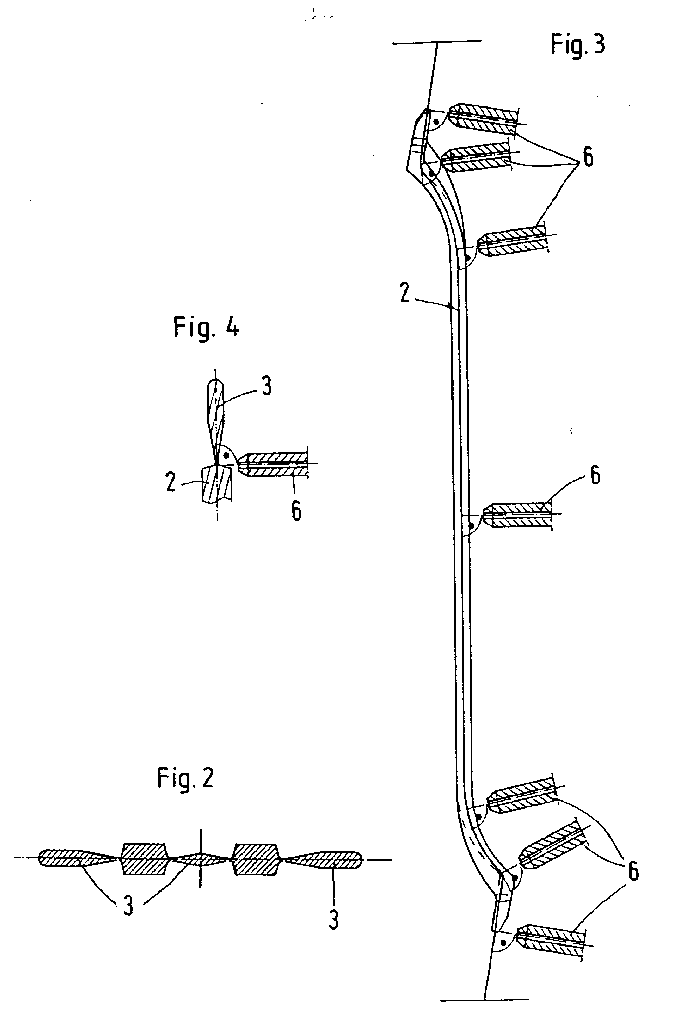

Das Verfahren zum Herstellen von im Gesenk geprägten oder geschmiedeten Werkstücken ist beim Ausführungsbeispiel nach Fig. 1 anhand eines Handwerkzeuges dargestellt, nämlich eines Doppelmaulschlüssels. Zur Herstellung dieses späteren Handwerkzeuges wird zuerst ein Spaltstück 1 von einer auf der Zeichnung nicht dargestellten Platine abgetrennt. Das Spaltstück 1 wird anschließend in einem Ofen erhitzt und in einem Gesenk geschmiedet. Hierdurch entsteht ein unterhalb des Spaltstückes 1 in Fig. 1 erkennbarer Schmiederohling 2. Dieser läßt bereitsden späteren Doppelmaulschlüssel erkennen, der jedoch allseits von einem Grat 3 umgeben ist. Der Querschnitt dieses Grates 3 ist in Fig. 2 zu erkennen.

Wie aus Fig. 1 weiterhin hervorgeht, wird dieser mit dem Grat 3 versehene Schmiederohling 2 anscbließend in einem Ofen 5 gehärtet. Erst nach dieser Wärmebehandlung des nicht entgrateten Schmiederohlings 2 wird dieser mittels eines bahngesteuerten Lasers entgratet, so daß der unterhalb des Ofens 5 erkennbare Werkstückrohling 4 entsteht. Durch die Verwendung eines Lasers ist es hierbei möglich, gleichzeitig mit dem Entgraten die Funktionsflächen des Werkstückrohlings 4 herzustellen, beim Ausführungsbeispiel also die maulartigen Schlüsselflächen.

Da diese Herstellung der Funktionsflächen durch den Laser mit hoher Präzision und Oberflächengüte erfolgt, kann eine spanabhebende Bearbeitung dieser Funktionsflächen entfallen, wenn der Schmiederohling 2 nach dem Härten entsprechend gerichtet worden ist. Außer der spanabhebenden Bearbeitung der Funktionsflächen entfällt somit auch eine bisher erforderliche Nacharbeitung der Funktionsflächen nach dem Härten, beispielsweise durch Schleifen. Es genügt, wenn gemäß Fig. 1 der durch den bahngesteuerten Laser aus dem Schmiederohling 2 erzeugte Werkstückrohrling 4 anschließend einem Gleitschleifvorgang und abschließend einer Oberflächenbehandlung, beispielsweise durch Verchromen unterzogen wird.

Bei dem voranstehend geschilderten Verfahren entfallen die bisher zum Entgraten in einer Presse verwendeten Schnittwerkzeuge, da der Schmiederohling nach dem Schmieden mittels des bahngesteuerten Lasers entgratet wird. Derartige Schnittwerkzeuge sind teuer in der Herstellung und einem ständigen Verschleiß unterworfen. Das Entgraten mittels eines bahngesteuerten Lasers ist aber nicht nur kostengünstiger, sondern ergibt eine höhere Qualität des entgrateten Werkstückrohlings 4, zumal die Bahn des Lasers dem Verschleiß des Gesenkes angepaßt werden kann. Es ist somit allein durch Anpassung der entsprechenden Steuerung möglich, der sich aufgrund des Gesenkverschleisses auftretenden Vergrößerung des Werkstückrohings 4 Rechnung zu tragen.

In Fig. 3 ist die Seitenansicht eines Werkstückes gezeichnet, und zwar anhand eines abgekröpften Ringschlüssels. Die in Fig. 3 eingezeichneten verschiedenen Stellungen eines Laserkopfes 6 lassen erkennen, daß dieser Laserkopf 6 derart im Raum geführt wird, daß er stets rechtwinklig zur Fläche des Grates verläuft und damit stets parallel zu der herzustellenden Funktionsfläche des herzustellenden Werkstückrohrlings 4. Fig. 4 zeigt in einem Teilschnitt die Zuordnung des Laserkopfes 6 zum Schmiederohling 2 in einer vergrößerten Darstellung.

### Bezugsziffernliste

- 1: Spaltstück
- 2: Schmiederohling
- 3: Grat
- 4: Werkstückrohling
- 5: Ofen
- 6: Laserkopf

## Patentansprüche

1. Verfahren zum Herstellen von im Gesenk geprägten oder geschmiedeten Werkstücken, vorzugsweise Handwerkzeugen, bei dem der Rohling nach dem Prägen oder Schmieden entgratet und einer Bearbeitung zumindest an den für die Funktion des Werkstückes wichtigen Flächen sowie einer Wärmebehandlung zur Gefügeveränderung unterworfen wird,
**dadurch gekennzeichnet,**
daß zum Entgraten des geprägten bzw. geschmiedeten Werkstückrohlings ein bahngesteuerter Laser verwendet wird, daß der Entgratvorgang nach der Wärmebehandlung des nicht entgrateten Rohlings erfolgt und der Laser im selben Arbeitsgang die Funktionsflächen des Werkstückrohlings herstellt.

2. Verfahren nach Anspruch 1, dadurch gekennzeichnet, daß die Bahn des Lasers bei Bedarf dem sich infolge Gesenkverschleißes vergrößernden Rohling angepaßt wird.

3. Verfahren nach Anspruch 1 oder 2, dadurch gekennzeichnet, daß der Laser derart im Raum geführt wird, daß er stets rechtwinklig zur Fläche des Grates und parallel zur Funktionsfläche verläuft.

## Claims

1. Procedure for making workpieces, preferably hand tools, embossed or forged in a forging die, in which the blank is deburred after embossing or forging and is subjected to machining at least at the surfaces which are important for the functioning of the workpiece and to a heat treatment to alter the structure, characterised in that a path-controlled laser is used, and in that the deburring operation is carried out after the heat treatment of the undeburred blank and the laser produces the functional surfaces of the workpiece blank in the same operation.

2. Procedure according to Claim 1, characterised in that the path of the laser is adjusted, if necessary, to the blank which increases in size as a result of forging die wear.

3. Procedure according to Claim 1 or 2, characterised in that the laser is spatially guided in such a way that it always extends at right angles to the surface of the burr and parallel to the functional surface.

## Revendications

1. Procédé pour la fabrication de pièces d'oeuvre battues ou forgées dans une matrice, de préférence d'outils à main, dans lequel l'ébauche est ébavurée après l'estampage ou le forgeage et est soumise à un usinage du moins sur les surfaces importantes pour la fonction de la pièce d'oeuvre ainsi qu'à un traitement thermique, caractérisé en ce qu'un laser à positionnement continu est utilisé pour l'ébavurage de l'ébauche battue ou forgée de la pièce d'oeuvre, en ce que l'étape d'ébavurage s'opère après le traitement thermique de l'ébauche non ébavurée et en ce que le laser au cours de la même étape de travail réalise les surfaces fonctionnelles de l'ébauche de la pièce d'oeuvre.

2. Procédé selon la revendication 1, caractérisé en ce que la trajectoire du laser est adaptée à un éventuel agrandissement de l'ébauche dû à l'usure de la matrice.

3. Procédé selon l'une quelconque des revendications 1 ou 2, caractérisé en ce que le laser est guidé dans l'espace de manière telle qu'il se déplace constamment en formant un angle droit par rapport à la surface de la bavure et parallèlement à la surface fonctionnelle.
